# EUROPEAN PATENT SPECIFICATION

(11) **EP 2 730 805 B1**
(45) Date of publication and mention of the grant of the patent: **09.12.2020**
(21) Application number: 12811870.0
(22) Date of filing: 26.03.2012
(51) Int. Cl.: F16H 1/32

(54) **REDUCTION GEAR**
UNTERSETZUNGSGETRIEBE
ENGRENAGE RÉDUCTEUR

(30) Priority: 08.07.2011 JP 2011152316
(43) Date of publication of application: 14.05.2014
(73) Proprietor: Sumitomo Heavy Industries, Ltd., Tokyo 141-6025 (JP)
(72) Inventor: ISHIZUKA, Masayuki, Yokosuka-shi Kanagawa 237-8555 (JP)
(74) Representative: Carstens, Dirk Wilhelm
(86) International application number: PCT/JP2012/057744
(87) International publication number: WO 2013/008492

(56) References cited:
- CN-A- 101 067 442
- CN-U- 201 521 627
- CN-U- 201 747 914
- DE-A1- 10 133 085
- DE-U1- 8 020 326
- JP-A- 2003 004 034
- JP-A- 2010 096 262
- JP-A- 2011 038 575
- JP-U- H0 490 716
- JP-U- 59 152 237
- JP-U- 64 031 235
- US-A- 4 524 644

## Description

### Technical Field

The present invention relates to a reduction gear and, in particular, to a reduction gear having an externally toothed gear externally fitted to a shaft.

### Background Art

In JP 2009-41747 A (Fig. 1), there is disclosed an eccentric oscillation type reduction gear having an eccentric body shaft, an externally toothed gear mounted on (externally fitted to) the outer periphery of the eccentric body shaft, and a bearing which is disposed between the eccentric body shaft and the externally toothed gear.

The reduction gear has an internally toothed gear with which the externally toothed gear is internally meshed, and extracts relative rotation of the externally toothed gear and the internally toothed gear as deceleration output. In such a reduction gear, the externally toothed gear functions as a so-called planetary gear and is rotatably mounted on the eccentric body shaft through the bearing. For this reason, in particular, in a case where the bearing does not have one or both of an inner ring and an outer ring, the determination of position restriction of the externally toothed gear in an axial direction will become problematic.

In the reduction gear related to JP 2009-41747 A, since two externally toothed gears are mounted side by side in the axial direction, each of a carrier member and a casing member existing at both end portions of the two externally toothed gears in the axial direction is made to function as a "position restriction member", and position restriction of both of the externally toothed gears in a receding direction is performed by the carrier member and the casing member. Furthermore, a spacer is interposed between the externally toothed gears, and the spacer is made to function as a "position restriction member" which performs position restriction of both of the externally toothed gears in an approaching direction.

JP S59-152237 U discloses a reduction gear wherein two rolling elements are arranged in a line in the axial direction. On both a inner ring side and an outer ring side, position restriction portions in the form of projection portions are formed between the two rolling elements, and other, different position restriction portions are formed outside of the two rolling elements.

CN 201 747 914 U was used as a basis for the preamble of claim 1 and discloses a concave raceway needle bearing in a planet transmission mechanism, belonging to the technology field of bearings. The concave raceway needle bearing comprises a planetary gear and a planetary gear shaft, the planetary gear is installed in the inner hole of the planetary gear; the inner hole of the planetary gear is of a concave cylindrical surface matched with the surface shape of the planetary gear shaft after deflection deformation. Since the inner hole of the planetary gear is processed into a concave cylindrical surface recessed toward the center, when the bearing force of the planetary gear reaches the maximum, the surface shape of the planetary gear inner hole is similar to the surface shape of the planetary gear shaft after deflection deformation, in this way, when the bearing works under the maximum load, the contact area of the needle roller and the raceway reaches the maximum, the contact stress correspondingly becomes smaller, thereby preventing appearance of surface pitting of needle roller and raceway, and prolonging service life of bearing.

CN 201 521 627 U relates to an axial positioning device of planet gear, wherein the planet gear is supported on the planet gear wheel shaft of a planet carrier through a left side bearing and a right side bearing, a gap is reserved axially between the left and the right bearings, a ring groove is formed circumferentially on the inner wall of the planet gear wheel shaft hole in the gap, a stop snap ring is inserted into the ring groove, the part of the stop snap ring inserted into the ring groove is matched with the inner cavity of the ring groove in shape, the two side surfaces of the stop snap ring extending out of the ring groove are propped against the left and the right bearings respectively, thereby limiting the axial displacement between the planet gear and the bearings, and the planet carrier limits the axial displacement of the bearings through the inner rings of the bearings, so as to realize the axial positioning of the planet gear at last.

Further, with regard to the available prior art, attention is drawn to CN 101 067 442 A, US 4,524,644A, JP 2003-004034 A, JP H04-090716 U, and DE 8030326 U.

### Summary of Invention

### Technical Problem

However, in this manner, in a structure to make a member which is located at a side portion of the externally toothed gear in the axial direction or a member interposed between the externally toothed gears function as a position restriction member of the externally toothed gear, there is a problem in that sliding resistance between the externally toothed gear and the position restriction member easily becomes large and thus energy (torque) transmission loss of the reduction gear tends to increase.

The present invention has been made in order to solve such a problem and has an object to provide a reduction gear having high transmission efficiency by performing position restriction in an axial direction of this type of externally toothed gear, that is, an externally toothed gear which is rotatably externally fitted to a shaft through a bearing which does not have at least one of an inner ring and an outer ring, with a configuration having small sliding resistance.

### Solution to Problem

According to the present invention, there is provided a reduction gear as set forth in claim 1. Preferred embodiments of the present invention may be gathered from the dependent claims.

In the rolling element of the bearing, position restriction in the axial direction is performed with respect to the shaft by the first position restriction member fixed to or integrated with the shaft and, on the other hand, position restriction in the axial direction is performed with respect to the externally toothed gear by the second position restriction member fixed to or integrated with the externally toothed gear.

For this reason, since the axial movement of the rolling element of the bearing is restricted with respect to both of the shaft and the externally toothed gear, after all, the axial movement of the externally toothed gear is restricted with respect to the "shaft" through the rolling element of the bearing.

In addition, in a case where the bearing has an inner ring fixed to the shaft (for example, press-fitting or the like), the inner ring is included in a concept of the first position restriction member. Furthermore, in a case where the bearing has an outer ring fixed to the externally toothed gear, the outer ring is included in a concept of the second position restriction member.

Sliding resistance between the first position restriction member fixed to or integrated with the shaft and the rolling element or sliding resistance between the second position restriction member fixed to or integrated with the externally toothed gear and the rolling element is small, compared to a case of performing position restriction by bringing an externally toothed gear into contact with a carrier member or a casing member, as in the related art. For this reason, consequently, position restriction of the externally toothed gear can be performed with small sliding resistance, and thus a reduction gear having high transmission efficiency can be obtained.

### Advantageous Effects of Invention

According to the present invention, a reduction gear having high transmission efficiency can be obtained by performing position restriction in the axial direction of the externally toothed gear which is rotatably and externally fitted to the shaft, with a configuration having small sliding resistance.

### Brief Description of Drawings

Fig. 1 is a cross-sectional view showing the configuration of a wheel driving apparatus of a forklift with a reduction gear related to an example of an embodiment of the present invention mounted thereon.
Fig. 2 is a cross-sectional view of a main section of Fig. 1.
Fig. 3 is a main section cross-sectional view equivalent to Fig. 2, showing modified examples of the above embodiment in Figs. 3(A) and (B).
Fig. 4 is a main section cross-sectional view showing an example of another embodiment of the present invention.

### Description of Embodiments

Hereinafter, examples of embodiments of the present invention will be described in detail based on the drawings.

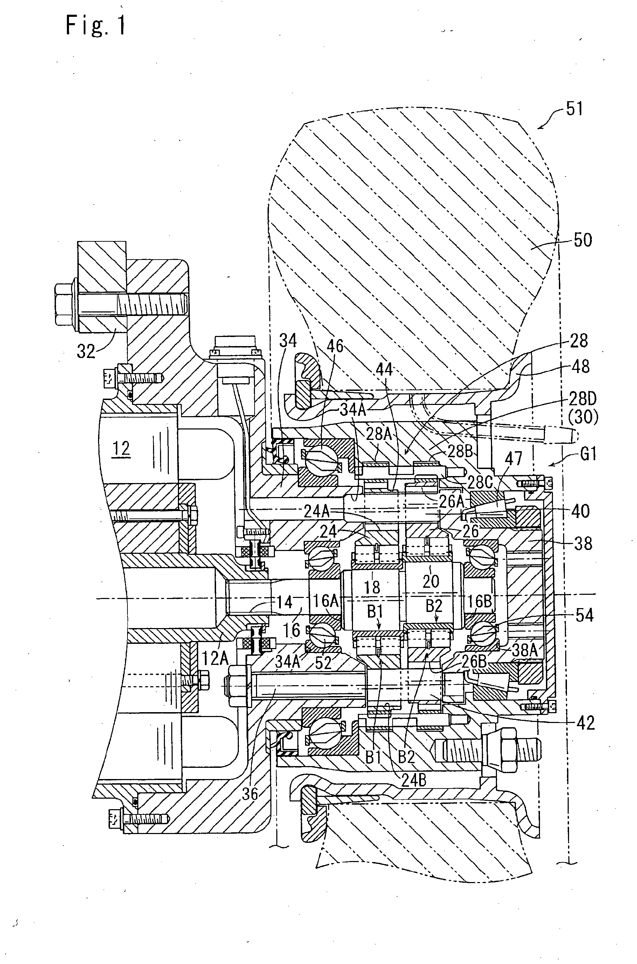

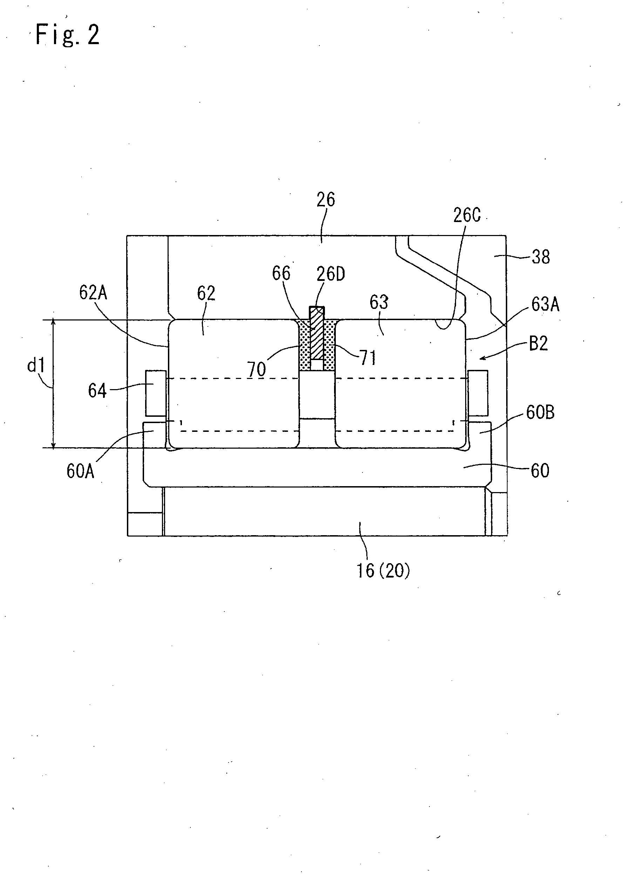

Fig. 1 is a cross-sectional view showing a configuration example in which a reduction gear related to an example of an embodiment of the present invention is applied to a wheel driving apparatus of a forklift, and Fig. 2 is a cross-sectional view of a main section thereof.

An output shaft 12A of a motor 12 is connected to an input shaft 16 of a reduction gear G1 through a spline 14. In this embodiment, the input shaft 16 is equivalent to a "shaft" related to the present invention. The input shaft 16 is disposed at the centers of externally toothed gears 24 and 26 (described later) in a radial direction. Two eccentric bodies 18 and 20, each having an axis center shifted from an axis center of the input shaft 16, are integrally formed at the input shaft 16. The two eccentric bodies 18 and 20 are eccentric to have a 180-degree phase difference with respect to one another.

In addition, the eccentric body may be configured as a separate body from the input shaft and then fixed to the input shaft by a key or the like. In this case, a shaft provided with the eccentric body (configured as a separate body from the input shaft) is equivalent to the "shaft" in the present invention.

The externally toothed gears 24 and 26 are externally fitted to the outer peripheries of the respective eccentric bodies 18 and 20 (the outer periphery of the shaft) through bearings B1 and B2. The configurations of the externally toothed gears 24 and 26 in the vicinity of the bearings B1 and B2 will be described in detail later.

The externally toothed gears 24 and 26 are internally meshed with an internally toothed gear 28.

The internally toothed gear 28 is configured to mainly include cylindrical internal tooth pins 28A and 28B which configure internal teeth, a retaining pin 28C which penetrates the internal tooth pins 28A and 28B and rotatably retains the internal tooth pins 28A and 28B, and an internally toothed gear main body 28D which rotatably supports the retaining pin 28C and is integrated with a casing 30.

The number of internal teeth of the internally toothed gear 28 (the number of internal tooth pins 28A and 28B) is slightly larger (in this embodiment, by one) than the number of external teeth of the externally toothed gears 24 and 26.

In addition, a flange body 34 fixed to a body frame 32 is disposed on the body side of the externally toothed gears 24 and 26 in an axial direction, and a carrier body 38 integrated with the flange body 34 through a carrier bolt 36 and a carrier pin 42 is disposed on the anti-body side in the axial direction. An inner pin 40 is integrally formed at the carrier body 38.

The inner pin 40 is provided in a plurality at regular intervals in a circumferential direction, passes, along with a sliding acceleration member 44, with a gap, through inner pin holes 24A and 26A formed in a penetrating manner at regular intervals in the circumferential direction in the externally toothed gears 24 and 26 to be offset from the centers thereof, and is fitted into a concave portion 34A of the flange body 34. The inner pin 40 is in contact with a portion of each of the inner pin holes 24A and 26A of the externally toothed gears 24 and 26 through the sliding acceleration member 44 and restricts the rotation of the externally toothed gears 24 and 26 (permits only oscillation).

The carrier pin 42 is also provided in a plurality at regular intervals in the circumferential direction, passes, with a gap, through carrier pin holes 24B and 26B formed in a penetrating manner at regular intervals in the circumferential direction in the externally toothed gears 24 and 26 to be offset from the centers thereof, and is in contact with an end portion of the flange body 34 in the axial direction. However, the carrier pin 42 is not in contact with the carrier pin holes 24B and 26B of the externally toothed gears 24 and 26 at all and does not contribute to restriction of the rotation of the externally toothed gears 24 and 26.

The casing 30 of the reduction gear G1 is rotatably supported on the flange body 34 (fixed to the body frame 32) and the carrier body 38 through main bearings 46 and 47. A tire 50 of a forklift (the entirety is not shown) 51 is mounted on the casing 30 through a frame 48. As is apparent from Fig. 1, the reduction gear G1 is placed in an axial range of the tire 50 (in a range shown by two-dot chain lines in Fig. 1).

The input shaft 16 is rotatably supported on the flange body 34 and the carrier body 38 through a pair of angular contact ball bearings 52 and 54.

An axial movement of the angular contact ball bearing 52 on the body side is restricted by the concave portion 34A of the flange body 34 and a body-side step portion 16A of the input shaft 16. An axial movement of the angular contact ball bearing 54 on the anti-body side is restricted by a step portion 38A of the carrier body 38 and an anti-body-side step portion 16B of the input shaft 16. For this reason, an axial movement of the input shaft 16 is also restricted with respect to any direction by the flange body 34 and the carrier body 38.

In addition, the pair of angular contact ball bearings 52 and 54 is disposed to face each other in this embodiment and is applied with an appropriate preload when the flange body 34 and the carrier body 38 are connected. For this reason, the input shaft 16 is positioned in the axial direction without play.

The configurations of the externally toothed gears 24 and 26 in the vicinity of the bearings B1 and B2 are shown referring to Fig. 2.

In Fig. 2, the externally toothed gear 26 on the anti-body side in the vicinity of the bearing B2 is depicted. Since the configuration of the externally toothed gear 24 on the body side in the vicinity of the bearing B1 also has the same configuration, here, for convenience, description will be made focusing on the vicinity of the bearing B2.

The bearing B2 related to this embodiment is disposed between the input shaft (the shaft) 16 and the externally toothed gear 26, and the externally toothed gear 26 serves as an outer ring. That is, the bearing B2 is configured to include an inner ring 60, rollers (rolling elements) 62 and 63, the externally toothed gear 26 that is also an outer ring, and a retainer 64 which retains integrally the rollers 62 and 63.

Axial movements of the rollers (the rolling elements) 62 and 63 with respect to the input shaft 16 are restricted by the inner ring (a first position restriction member) 60 fixed to the input shaft (the shaft) 16. At the same time, axial movements of the rollers 62 and 63 with respect to the externally toothed gear 26 are restricted by a snap ring (a second position restriction member) 66 fixed to the externally toothed gear 26. Hereinafter, description will be made in detail.

The inner ring 60 of the bearing B2 functions as the first position restriction member in the present invention. That is, the inner ring 60 is fixed by being press-fitted to the input shaft 16, and projection portions (position restriction portions) 60A and 60B for performing position restriction of the rollers 62 and 63 are formed at both end portions of the inner ring 60 in the axial direction. In this embodiment, a plurality of rollers 62 and 63 is disposed in the axial direction with respect to a single externally toothed gear 26 (or externally toothed gear 24), and the projection portions 60A and 60B of the inner ring 60 come into contact with side surfaces 62A and 63A on the outermost side of the rollers 62 and 63 arranged in a plurality, thereby restricting the axial movements of the rollers 62 and 63 with respect to the input shaft 16 (especially, movements of the rollers 62 and 63 in a receding direction from each other).

On the other hand, the externally toothed gear 26 also serves as the outer ring of the bearing B2 and an inner peripheral surface 26C configures the rolling surfaces of the rollers 62 and 63. A groove 26D is formed at the center of the inner peripheral surface 26C in the axial direction. The snap ring 66 is fitted in the groove 26D.

The snap ring 66 functions as the second position restriction member in the present invention. That is, the snap ring 66 is fixed to the externally toothed gear 26 and disposed between the roller 62 and the roller 63 through thrust plates 70 and 71, thereby restricting the axial movements of the rollers 62 and 63 with respect to the externally toothed gear 26 (especially, movements of the rollers 62 and 63 in an approaching direction).

In addition, the snap ring 66 related to this embodiment has a cutout (not shown) formed along a radial direction and is mounted in a state where an outer diameter is reduced by reducing the dimension of the cutout by using elastic deformation. That is, the snap ring 66 is mounted between the input shaft 16 and the externally toothed gear 26 along the axial direction along with the inner ring 60, the rollers 62 and 63, the retainer 64, and the thrust plates 70 and 71 in a state of being reduced in diameter. The snap ring 66 with the outer diameter reduced is expanded in diameter (returns to the original dimension) at the position of the groove portion 26D of the externally toothed gear 26, thereby being fixed to the groove portion 26D.

The retainer 64 of the bearing B2 rotatably retains the rollers 62 and 63. That is, the retainer 64 retains a plurality of rollers 62 and 63 as a "unity of a single roller group" and performs position restriction in the circumferential direction and position restriction in the axial direction of individual rollers 62 and 63. In addition, the retainer 64 is prepared in order to maintain the rotational posture of the roller in this embodiment and need not be necessarily provided in terms of "position restriction of the rollers (the rolling elements) 62 and 63 in the axial direction".

Hereinafter, an operation of the reduction gear G1 related to this embodiment will be described.

The rotation of the output shaft 12A of the motor 12 is transmitted to the input shaft 16 of the reduction gear G1 through the spline 14. If the input shaft 16 rotates, the eccentric bodies 18 and 20 (the outer peripheries thereof) perform eccentric motion, and thus the externally toothed gears 24 and 26 oscillate through the bearings B1 and B2. Due to the oscillation, a phenomenon occurs in which meshing position between the externally toothed gears 24 and 26 and the internally toothed gear 28 is shifted sequentially.

Since a difference in the numbers of teeth between the externally toothed gears 24 and 26 and the internally toothed gear 28 is set to be 1 and the rotation of each of the externally toothed gears 24 and 26 is restricted by the inner pin 40 fixed to the body frame 32 side, every time the input shaft 16 rotates once, the internally toothed gear 28 rotates by an amount equivalent to a difference in the number of teeth with respect to the externally toothed gears 24 and 26 with the rotation restricted. As a result, due to the rotation of the input shaft 16, the casing 30 integrated with the internally toothed gear main body 28D rotates at a rotating speed reduced to a value of 1/(the number of teeth of the internally toothed gear) and the tire 50 of the forklift 51 rotates through the frame 48 fixed to the casing 30.

Here, the input shaft 16 is rotatably supported on the flange body 34 and the carrier body 38 through the pair of angular contact ball bearings 52 and 54. Of these bearings, an axial movement of the angular contact ball bearing 52 on the body side is restricted by the step portion 34A of the flange body 34 and the body-side step portion 16A of the input shaft 16, and an axial movement of the angular contact ball bearing 54 on the anti-body side is restricted by the step portion 38A of the carrier body 38 and the anti-body-side step portion 16B of the input shaft 16. For this reason, an axial movement of the input shaft 16 is also restricted with respect to any direction by the flange body 34 and the carrier body 38.

On the other hand, referring to Fig. 2, the inner ring 60 of the bearing B2 (the bearing B1 side is also the same) is fixed by being press-fitted to the input shaft 16 (with the axial movement thereof restricted) (the outer periphery of the eccentric body 20 thereof) and the rollers 62 and 63 are in contact with the projection portions (the position restriction portions) 60A and 60B formed at both end portions of the inner ring 60 in the axial direction. Furthermore, the snap ring 66 is fixed to the externally toothed gear 26 by being fitted in the groove 26D formed at the center of the inner peripheral surface (the rolling surface) 26C of the externally toothed gear 26 in the axial direction and the rollers 62 and 63 are in contact with the snap ring 66 (through the thrust plates 70 and 71).

As a result, (a) the input shaft (the shaft) 16 is restricted in position in the axial direction with respect to the flange body 34 and the carrier body 38 through the pair of angular contact ball bearings 52 and 54, (b) the inner ring (the first position restriction member) 60 is restricted in position in the axial direction with respect to the input shaft 16 by being press-fitted and fixed to the input shaft 16, (c) the rollers 62 and 63 are restricted in position in the axial direction with respect to the inner ring 60 by the projection portions (the position restriction portions) 60A and 60B of the inner ring 60, and (d) the externally toothed gear 26 is restricted in position in the axial direction with respect to the rollers 62 and 63 by the snap ring (the second position restriction member) 66 fixed to the externally toothed gear 26 through the rollers 62 and 63, and as a result, (e) the externally toothed gear 26 is restricted in position in the axial direction with respect to the flange body 34 and the carrier body 38 without coming into contact with the flange body 34 and the carrier body 38.

The distances of a contact portion between each of the projection portions 60A and 60B of the inner ring 60 and each of the rollers 62 and 63 and a contact portion between each of the thrust plates 70 and 71 and each of the rollers 62 and 63 from the center of the externally toothed gear 26 are smaller than the distance of a contact portion between an externally toothed gear and a carrier member or a casing member from the center of the externally toothed gear in the related art. For this reason, sliding resistance between the projection portions 60A and 60B of the inner ring 60 and the rollers 62 and 63 or sliding resistance between the snap ring 66 (and the thrust plates 70 and 71) and the rollers 62 and 63 is small, compared to a case where an externally toothed gear is brought into contact with a carrier member or a casing member, thereby being restricted in position as in the related art. For this reason, consequently, position restriction of the externally toothed gear 26 (or the externally toothed gear 24) can be performed with small sliding resistance, and thus the reduction gear G1 having high transmission efficiency can be obtained.

Furthermore, since the snap ring 66 and the rollers 62 and 63 are slid with respect to each other through the thrust plates 70 and 71, rather than being simply directly slid, sliding resistance becomes further smaller. In addition, the thrust plates 70 and 71 also exhibit the effect of preventing rotation from being inhibited due to fitting of the rollers 62 and 63 in slits formed along the radial direction in the snap ring 66. For example, in a case of cold-fitting a snap ring having no slit (or, shrink-fitting the externally toothed gear), the thrust plates 70 and 71 need not be provided.

Furthermore, in this embodiment, a configuration is adopted in which a dedicated inner ring 60 is provided and the externally toothed gear 26 serves as an outer ring. In a case of comparing this configuration with a configuration in which an outer ring is provided and a shaft serves as an inner ring, since the pitch circle diameter of a roller of a bearing can be taken to be larger (by the extent that there is no outer ring), this configuration is excellent in terms of being able to secure larger transmission capacity. Furthermore, this configuration is excellent in terms of being able to use the high hardness of a gear of the externally toothed gear 26 as the hardness of the rolling surface of a rolling element.

Due to the configuration and the operation described above, according to this embodiment, compared to a configuration of directly restricting a side portion of an externally toothed gear as in the related art, position restriction of the externally toothed gear 26 in the axial direction can be performed with smaller sliding resistance and transmission loss of the reduction gear G1 can be reduced accordingly.

Various variations can be considered in the present invention.

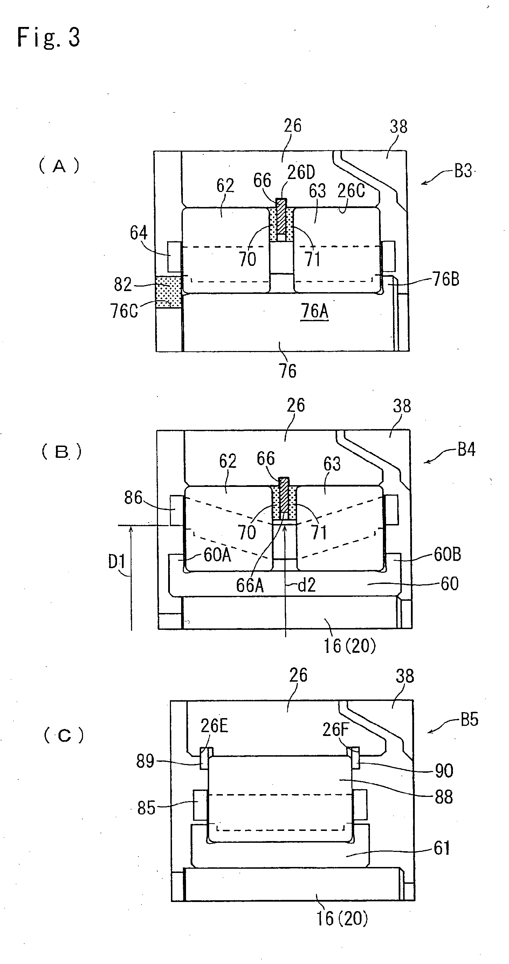

Figs. 3(A) to 3(C) are partial enlarged views equivalent to Fig. 2, and Figs. 3(A) and 3(B) show configuration examples of variations of the present invention. In addition, with respect to the same configuration sites as those in the previous embodiment, the same members as those in the previous embodiment are denoted by the same reference numerals in the drawings and overlapping description is omitted.

In a bearing B3 shown in Fig. 3 (A), the externally toothed gear 26 serves as an outer ring and the input shaft 16 serves as an inner ring. That is, in the configuration shown in Fig. 3(A), the bearing B3 has neither a dedicated inner ring or a dedicated outer ring.

In this embodiment, the rollers 62 and 63 are restricted in position with respect to an input shaft 76 by a projection portion 76B integrally formed at an end portion of an eccentric body 76A of the input shaft 76 in the axial direction and also restricted in position with respect to the input shaft 76 by a snap ring 82 (also serving as a thrust plate) fixed to a groove 76C provided between eccentric bodies (not shown) adjacent to the eccentric body 76A.

That is, in this embodiment, each of the projection portion 76B of the eccentric body 76A integrated with the input shaft 76 and the snap ring 82 fixed to the input shaft 76 configures the first position restriction member.

In this manner, in the present invention, even if a bearing (without having both a dedicated inner ring and a dedicated outer ring) has a configuration in which a roller (a rolling element) is directly disposed between a shaft and an externally toothed gear, the bearing can be applied.

Furthermore, although illustration is not made, a configuration in which only a dedicated outer ring is provided and a shaft serves as an inner ring of a bearing can also be applied in the same way. In this case, by fixing the outer ring to an externally toothed gear by press fitting, shrink fitting, or the like, it is possible to make the outer ring function as the second position restriction member fixed to the externally toothed gear.

In a configuration shown in Fig. 3(B), the configurations of the first and second position restriction members are the same as those in the first embodiment described above. However, the configuration of a retainer 86 which rotatably retains the rollers 62 and 63 of a bearing B4 is different from that in the previous embodiment.

Specifically, in the retainer 86 of the bearing B4 shown in Fig. 3(B), an inner diameter D1 of a portion radially overlapping with the position restriction portions 60A and 60B protruding from the inner ring (the first position restriction member) 60 in the radial direction is made to be the largest inner diameter, and the inner diameter of a portion other than the portion is linearly inclined toward the inside in the axial direction, thereby being made smaller than (different from) the inner diameter D1. Furthermore, an outer diameter d2 of a portion radially overlapping with a projection portion (a position restriction portion) 66A protruding from the snap ring (the second position restriction member) 66 in the radial direction is made to be the smallest outer diameter, and the outer diameter of a portion other than the portion is linearly inclined from the inside in the axial direction to the outside, thereby being made larger than (different from) the outer diameter d2.

In this way, it is possible to more reliably retain the rollers 62 and 63 by the retainer 86 while preventing interference of the projection portions 60A and 60B of the inner ring 60 and the snap ring 66 of the externally toothed gear 26 with the retainer 86.

In a configuration shown in Fig. 3(C), only one roller (a rolling element) 88 of a bearing B5 is disposed with respect to each of the eccentric bodies 18 and 20 of the input shaft 16 and each of the externally toothed gears 24 and 26. With regard to position restriction of the roller 88 with respect to the input shaft 16, as the first position restriction member, an inner ring 61 is press-fitted and fixed to the input shaft 16 and the same configuration as that in the first embodiment described above is adopted. However, with regard to position restriction of the roller 88 with respect to the externally toothed gear 26 (the externally toothed gear 24 side is also the same), as the second position restriction member, two snap rings 89 and 90 are respectively disposed in and fixed to two grooves 26E and 26F formed in both end portions of the externally toothed gear 26 in the axial direction. In addition, reference numeral 85 denotes a retainer.

Also by such a configuration, it is possible to perform movement restriction of the externally toothed gear 26 (or the externally toothed gear 24) in the axial direction with respect to the input shaft 16 by each element of the input shaft 16, the inner ring 60, the roller 88, and the snap rings 89 and 90.

In all of the previous embodiment and the variations thereof, the present invention is applied to a type of eccentric oscillation type planetary reduction gear in which an input shaft also serves as an eccentric body shaft having an eccentric body. However, the present invention can also be applied to, for example, a known eccentric oscillation type planetary reduction gear calleda so-called "distribution type".

In the eccentric oscillation type planetary reduction gear of the distribution type, an externally toothed gear is eccentrically oscillated by distributing the rotation of an input shaft to a plurality of eccentric body shafts disposed at positions offset from the rotation center of the input shaft and simultaneously rotating eccentric bodies respectively provided on the plurality of eccentric body shafts in the same phase.

In a case where the revolution of each eccentric body shaft (the rotation of the externally toothed gear) is restricted, it is possible to extract the rotation of an internally toothed gear (a casing) as output, and in a case where the internally toothed gear (casing) side is fixed, it is possible to extract the revolution of each eccentric body shaft (the rotation of the externally toothed gear) as output.

Also in the eccentric oscillation type planetary reduction gear of the distribution type, the structure of a bearing which is disposed between the eccentric body shaft which includes the eccentric body and the externally toothed gear becomes the same as the structure of the bearing which is disposed between the input shaft which includes the eccentric body and the externally toothed gear in the previous embodiment, and thus it is possible to apply the present invention with the same aspect as that in the previous embodiment to the gear.

Further, the present invention is not limited to such an eccentric oscillation type planetary reduction gear but can also be applied to, for example, a simple planetary gear reduction gear.

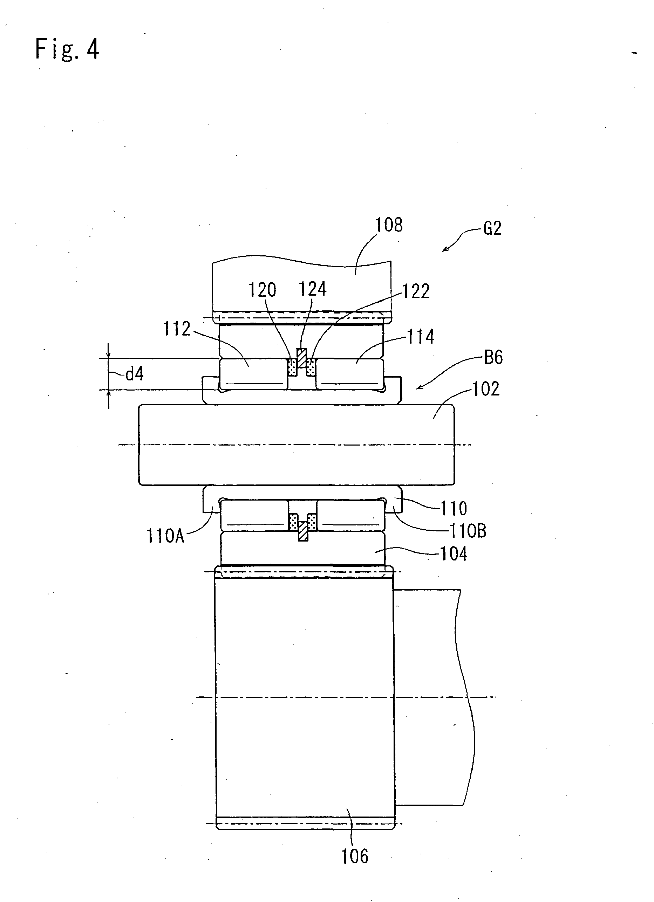

A configuration example in which the present invention is applied to a simple planetary gear reduction gear G2 is shown in Fig. 4.

In this embodiment, the present invention is applied to the simple planetary gear reduction gear G2 having a carrier pin (a shaft) 102, a planetary gear (an externally toothed gear) 104 which is externally fitted to the carrier pin 102, and a bearing B6 which is disposed between the carrier pin 102 and the planetary gear 104. In addition, reference numeral 106 denotes a sun gear, and reference numeral 108 denotes an internally toothed gear.

In the bearing B6, the planetary gear 104 serves as an outer ring. An inner ring (a first position restriction member) 110 is fixed to the carrier pin 102 by press-fitting and restricts axial movements of rollers (rolling elements) 112 and 114 with respect to the carrier pin 102. Both ends of the carrier pin 102 are press-fitted to a flange member (a carrier member) (not shown), and thus an axial movement of the carrier pin 102 is restricted. Furthermore, the axial movements of the rollers (the rolling elements) 112 and 114 with respect to the planetary gear 104 are restricted by a snap ring (a second position restriction member) 124 fixed to the inner periphery of the planetary gear 104. This embodiment is the same as the previous embodiment in that a plurality of rollers 112 and 114 is provided in the axial direction and the snap ring 124 fixed to the planetary gear 104 is disposed between the rollers 112 and 114 through thrust plates 120 and 122.

Also in this embodiment, the distances of a contact portion between each of projection portions 110A and 110B of the inner ring 110 and each of the rollers 112 and 114 and a contact portion between each of the thrust plates 120 and 122 and each of the rollers 112 and 114 from the center of the planetary gear (the externally toothed gear) 104 are smaller than the distance of a contact portion between a planetary gear and a carrier member or a casing from the center of a sun gear (being the center of the revolution of the planetary gear 104) in the related art. For this reason, sliding resistance between the projection portions 110A and 110B of the inner ring 110 and the rollers 112 and 114 or sliding resistance between the snap ring 124 (and the thrust plates 120 and 122) and the rollers 112 and 114 is small, compared to a case where an externally toothed gear is brought into contact with a carrier member or a casing member, thereby being restricted as in the related art.

As a result, position restriction of the planetary gear 104 can be performed with small sliding resistance, and thus the transmission efficiency of the entirety of the simple planetary gear reduction gear G2 can be improved.

In particular, in the simple planetary gear reduction gear G2, since a configuration is often made in which the planetary gears 104 discontinuously existing in the circumferential direction revolve, a configuration of restricting the positions of the respective planetary gears 104 from a side portion in the axial direction is unlikely to be attained. However, according to the present invention, since the position restriction of the planetary gear is completed by the relationship between the carrier pin 102 and the bearing B6, the advantage that is obtained in design relating to disposition of each member is also great.

In addition, as an application example of an externally toothed gear which is externally fitted to a shaft through a bearing, a planetary gear of a planetary gear reduction gear is a typical application example. However, the externally toothed gear in the present invention is not necessarily limited to a planetary gear of a planetary gear reduction gear. In short, if it is a reduction gear which has a shaft, an externally toothed gear that is externally fitted to the shaft, and a bearing that is disposed between the shaft and the externally toothed gear in which at least one of an inner ring and the shaft or the externally toothed gear serves as an outer ring of the bearing, the present invention can be applied thereto in the same way.

Furthermore, in the previous embodiments, the present invention is applied to a reduction gear which is incorporated in a wheel driving apparatus of a forklift. However, a driving apparatus or a mechanical apparatus in which the reduction gear according to the present invention is incorporated is not limited to the wheel driving apparatus of the forklift but the present invention can be applied to various driving apparatuses or mechanical apparatuses such as a robot, a machine tool, or transport machinery.

Further, in the previous embodiments, only one inner ring is mounted in a case where two rollers are disposed with respect to a single externally toothed gear. However, in the present invention, separate inner rings may be mounted with respect to the respective rollers. This is also the same in a case of having only an outer ring.

### Industrial Applicability

The present invention can be widely applied to a reduction gear which has a shaft, an externally toothed gear that is externally fitted to the shaft, and a bearing that is disposed between the shaft and the externally toothed gear in which at least one of an inner ring and the shaft or the externally toothed gear serves as an outer ring of the bearing.
- 18, 20:: eccentric body
- 24, 26:: externally toothed gear
- 28:: internally toothed gear
- 30:: casing
- 60:: inner ring
- 62, 63:: roller
- 64:: retainer
- 66:: snap ring
- 70, 71:: thrust plate

## Claims

1. A reduction gear (G1) comprising:
a shaft (16);
an externally toothed gear (26) that is externally fitted to the shaft (16); and
a bearing (B2) that is disposed between the shaft (16) and the externally toothed gear (26),
wherein the shaft (16) or the externally toothed gear (26) serve as at least one of an inner ring and an outer ring of the bearing (B2),
wherein an axial movement of a rolling element (62, 63) of the bearing (B2) is restricted by a first position restriction member (60) fixed to or integrated with the shaft (16) and a second position restriction member (66) fixed to or integrated with the externally toothed gear (26), whereby an axial movement of the externally toothed gear (26) with respect to the shaft (16) is restricted,
wherein the bearing (B2) comprises a first rolling element (62) and a second rolling element (63) that are arranged in a line in the axial direction,
wherein the first position restriction member (60) comprises a position restriction portion (60A, 60B) that is located outside of the first rolling element (62) and the second rolling element (63) in the axial direction,
wherein the second position restriction element (66) is located between the first rolling element (62) and the second rolling element (63) in an axial direction,
wherein the rolling element (62, 63) is slid with the second position restriction member (66), or slid with a thrust plate (70, 71) which is interposed between the second position restriction member (66) and the rolling element (62, 63)
wherein, viewed from a radial direction of the shaft (16), the position restriction portion (60A, 60B) of the first position restriction member (60) does not overlap with the second position restriction member (66), and when the thrust plate (70, 71) is interposed, the position restriction portion (60A, 60B) also does not overlap with the thrust plate (70, 71), and
**characterized in that**
the bearing (B2) is provided with a retainer (64) which retains the first rolling element (62) and the second rolling element (63),
the position restriction portion (60A, 60B) of the first position restriction member (60) is located inside of the retainer (64) in the radial direction, and
the second position restriction member (66) is located outside of the retainer (64) in the radial direction.

2. The reduction gear according to Claim 1, wherein the externally toothed gear (26) serves as the outer ring, and
wherein the second position restriction member (66) is configured to have a snap ring fixed to the externally toothed gear (26).

3. The reduction gear according to any one of Claims 1 or 2, wherein the inner ring of the bearing (B2) functions as the first position restriction member (60); and
wherein a projection portion as the position restriction portion (60A, 60B) is formed at both end portions of the inner ring in the axial direction.

4. The reduction gear according to any one of Claims 1 to 3, wherein the bearing (B2) is provided with a retainer (64) which rotatably retains the rolling element (62, 63), and
wherein the retainer (64) has different outer diameters or inner diameters at a first portion radially overlapping with the position restriction portion (60A, 60B) of the first position restriction member (60) or the second position restriction member (66) and another portion other than the first portion.

5. The reduction gear according to any one of Claims 1 to 4, wherein the first position restriction member (60) or the second position restriction member (66) is configured to have a snap ring, and a thrust plate (70, 71) is interposed between the snap ring and the rolling element (62, 63).

## Patentansprüche

1. Untersetzungsgetriebe (G1), das Folgendes aufweist:
eine Welle (16);
ein außenverzahntes Zahnrad (26), welches außen auf die Welle (16) gepasst ist; und
ein Lager (B2), welches zwischen der Welle (16) und dem außenverzahnten Zahnrad (26) angeordnet ist,
wobei die Welle (16) oder das außenverzahnte Zahnrad (26) als ein Innenring und/oder als ein Außenring des Lagers (26) dienen,
wobei eine axiale Bewegung eines Wälzelementes (62, 63) des Lagers (B2) durch ein erstes Positionsbegrenzungsglied (60) begrenzt ist, das an der Welle (16) befestigt ist oder mit der Welle (16) integriert ist, und durch ein zweites Positionsbegrenzungsglied (66), welches an dem außenverzahnten Zahnrad (26) befestigt ist oder mit diesem integriert ist, wodurch eine axiale Bewegung des außenverzahnten Zahnrades (26) bezüglich der Welle (16) begrenzt ist,
wobei das Lager(B2) ein erstes Wälzelement (629 und ein zweites Wälzelement (63) aufweist, die in der axialen Richtung in einer Linie angeordnet sind,
wobei das erste Positionsbegrenzungsglied (60) einen Positionsbegrenzungsteil (60A, 60B) aufweist, der in der axialen Richtung außerhalb des ersten Wälzelementes (62) und des zweiten Wälzelementes (63) angeordnet ist,
wobei das zweite Positionsbegrenzungselement (66) in der axialen Richtung zwischen dem ersten Wälzelement (62) und dem zweiten Wälzelement (63) angeordnet ist,
wobei das Wälzelement (62, 63) mit dem zweiten Positionsbegrenzungsglied (66) verschoben wird oder mit einer Schubplatte (70, 71) verschoben wird, die zwischen dem zweiten Positionsbegrenzungsglied (66) und dem Wälzelement (62, 63) angeordnet ist,
wobei in einer Ansicht aus einer radialen Richtung der Welle (16) der Positionsbegrenzungsteil (60A, 60B) des ersten Positionsbegrenzungsgliedes (60) nicht mit dem zweiten Positionsbegrenzungsglied (66) überlappt, und wobei, wenn die Schubplatte (70, 71) dazwischen angeordnet ist, der Positionsbegrenzungsteil (60A, 60B) auch nicht mit der Schubplatte (70, 71) überlappt, und
**dadurch gekennzeichnet, dass**
das Lager (B2) mit einem Käfig bzw. Halter (64) versehen ist, der das erste Wälzelement (62) und das zweite Wälzelement (63) hält,
der Positionsbegrenzungsteil (60A, 60B) des ersten Positionsbegrenzungsgliedes (60) in der radialen Richtung innerhalb des Halters (64) angeordnet ist, und
das zweite Positionsbegrenzungsglied (66) in der radialen Richtung außerhalb des Halters (64) angeordnet ist.

2. Untersetzungsgetriebe nach Anspruch 1, wobei das außenverzahnte Zahnrad (26) als der Außenring dient und
wobei das zweite Positionsbegrenzungsglied (66) so konfiguriert ist, dass ein Sicherungsring an dem außenverzahnten Zahnrad (26) befestigt ist.

3. Untersetzungsgetriebe nach einem der Ansprüche 1 oder 2, wobei der Innenring des Lagers (B2) als das erste Positionsbegrenzungsglied (60) wirkt, und
wobei ein vorstehender Teil als der Positionsbegrenzungsteil (60A, 60B) in der axialen Richtung an beiden Endteilen des Innenrings geformt ist.

4. Untersetzungsgetriebe nach einem der Ansprüche 1 bis 3, wobei das Lager (B2) mit einem Käfig bzw. Halter (64) versehen ist, der das Wälzelement (62, 63) drehbar hält, und
wobei der Halter (64) unterschiedliche Außendurchmesser oder Innendurchmesser hat, und zwar an einem ersten Teil, der radial mit dem Positionsbegrenzungsteil (60A, 60B) des ersten Positionsbegrenzungsgliedes (60) oder des zweiten Positionsbegrenzungsgliedes (66) überlappt, und an einem anderen Teil als dem ersten Teil.

5. Untersetzungsgetriebe nach einem der Ansprüche 1 bis 4, wobei das erste Positionsbegrenzungsglied (60) oder das zweite Positionsbegrenzungsglied (66) so konfiguriert ist, dass es einen Sicherungsring hat und wobei eine Schubplatte (70, 71) zwischen dem Sicherungsring und dem Wälzelement (62, 63) angeordnet ist.

## Revendications

1. Engrenage réducteur (G1) comprenant :
un arbre (16) ;
un engrenage denté extérieurement (26) qui est monté extérieurement sur l'arbre (16) ; et
un palier (B2) qui est disposé entre l'arbre (16) et l'engrenage denté extérieurement (26),
dans lequel l'arbre (16) ou l'engrenage denté extérieurement (26) sert en tant qu'au moins un élément parmi une bague intérieure et une bague extérieure du palier (B2),
dans lequel un mouvement axial d'un élément de roulement (62, 53) du palier (B2) est limité par un premier élément de restriction de position (60) fixé ou intégré à l'arbre (16) et par un deuxième élément de restriction de position (66) fixé ou intégré à l'engrenage denté extérieurement (26), d'où il résulte qu'un mouvement axial de l'engrenage denté extérieurement (26) par rapport à l'arbre (16) est limité,
dans lequel le palier (B2) comprend un premier élément de roulement (62) et un deuxième élément de roulement (63) qui sont agencés en ligne selon la direction axiale,
dans lequel le premier élément de restriction de position (60) comprend une partie de restriction de position (60A, 60B) qui est située en-dehors du premier élément de roulement (62) et du deuxième élément de roulement (63) dans la direction axiale,
dans lequel le deuxième élément de restriction de position (66) est situé entre le premier élément de roulement (62) et le deuxième élément de roulement (63) dans une direction axiale,
dans lequel l'élément de roulement (62, 63) est glissé avec le deuxième élément de restriction de position (66), ou glissé avec une plaque de poussée (70, 71) qui est interposée entre le deuxième élément de restriction de position (66) et l'élément de roulement (62, 63),
dans lequel, vue depuis une direction radiale de l'arbre (16), la partie de restriction de position (60A, 60B) du premier élément de restriction de position (60) ne chevauche pas le deuxième élément de restriction de position (66), et lorsque la plaque de poussée (70, 71) est interposée, la partie de restriction de position (60A, 60B) ne chevauche également pas la plaque de poussée (70, 71), et
**caractérisé en ce que**
le palier (B2) est muni d'un dispositif de retenue (64) qui retient le premier élément de roulement (62) et le deuxième élément de roulement (63),
la partie de restriction de position (60A, 60B) du premier élément de restriction de position (60) est situé à l'intérieur du dispositif de retenue (64) dans la direction radiale, et
le deuxième élément de restriction de position (66) est situé à l'extérieur du dispositif de retenue (64) dans la direction radiale.

2. Engrenage réducteur selon la revendication 1, dans lequel l'engrenage denté extérieurement (26) sert de bague extérieure, et
dans lequel le deuxième élément de restriction de position (66) est configuré pour avoir une bague élastique fixée à l'engrenage denté extérieurement (26).

3. Engrenage réducteur selon la revendication 1 ou 2, dans lequel la bague intérieure du palier (B2) fonctionne en tant que premier élément de restriction de position (60) ; et
dans lequel une partie en saillie constituant la partie de restriction de position (60A, 60B) est formée aux deux parties d'extrémité de la bague intérieure dans la direction axiale.

4. Engrenage réducteur selon l'une quelconque des revendications 1 à 3, dans lequel le palier (B2) est muni d'un dispositif de retenue (64) qui retient en rotation l'élément de roulement (62, 63), et
dans lequel le dispositif de retenue (64) a différents diamètres extérieurs ou diamètres intérieurs au niveau d'une partie chevauchant radialement la partie de restriction de position (60A, 60B) du premier élément de restriction de position (60) ou le deuxième élément de restriction de position (66) et une partie autre que la première partie.

5. Engrenage réducteur selon l'une quelconque des revendications 1 à 4, dans lequel le premier élément de restriction de position (60) ou le deuxième élément de restriction de position (66) est configuré pour avoir une bague élastique, et une plaque de poussée (70, 71) est interposée entre l'anneau élastique et l'élément de roulement (62, 63).
